# EUROPEAN PATENT SPECIFICATION

(11) **EP 0 566 403 B1**
(45) Date of publication and mention of the grant of the patent: **12.08.1998**
(21) Application number: 93302924.1
(22) Date of filing: 15.04.1993
(51) Int. Cl.: G11B 33/04

(54) **Enclosures for disks**
Behälter für Platte
Boîtier pour disque

(30) Priority: 16.04.1992 US 869815; 26.05.1992 US 889598
(43) Date of publication of application: 20.10.1993
(73) Proprietor: SONY CORPORATION, Tokyo (JP)
(72) Inventor: Stumpff, David L., Alpharetta, Georgia 30202 (US); Taniyama, Yoshihiko, Alpharetta, Georgia 30202 (US)
(74) Representative: Cotter, Ivan John

(56) References cited:
- EP-A- 186 359
- EP-A- 330 292
- EP-A- 531 113
- DE-A- 3 425 579
- DE-U- 8 523 194
- DE-U- 8 906 570
- US-A- 4 886 166
- US-A- 4 993 552

## Description

This invention relates to an enclosure for a mini-disk cartridge wherein the cartridge may be packaged for retail sale and/or used for storage by the consumer.

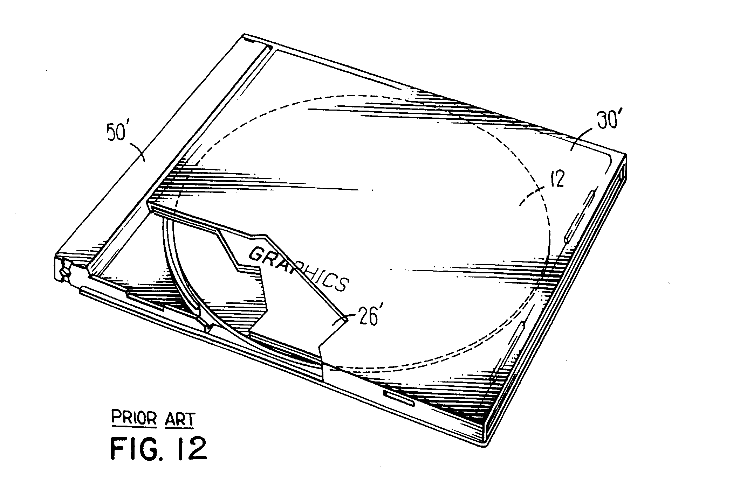

As shown in FIG. 12 of the accompanying drawings, conventional storage containers for a standard compact disk 12 or the like are often called jewel boxes. The jewel box is usually made of transparent plastic and is rectangular in shape. Many such jewel boxes include three distinct components: a rectangular base tray 50', a corresponding rectangular cover 30', and a mounting hub (not shown). Usually, the base tray and cover are pivotally connected at their base corners to form a clam shell-like enclosure, and the mounting hub is inserted into the base tray.

The cover of the jewel box may have interior walls which correspond to the total height of the container. These walls may have several inwardly protruding tabs which are used to hold a promotional booklet or other identifying material 26' in a position where it can be viewed through the cover. When secured into place under the tabs, these articles usually cover the disk and act as a top view display.

The base tray of the typical prior art jewel box is determined to be slightly larger than a typical compact disk in all dimensions. In one type of jewel box, several tabs protrude from the interior walls of the base tray. The mounting hub is inserted into place on top of these tabs and a promotional card may be placed face down on the base tray's interior surface under the tabs. Installing the mounting hub on top of the card allows the consumer to readily identify the contents of the jewel box from both the bottom and the top of the package. The interior surface of the base tray may also include arced ribs which extend upwardly and surround the disk in a manner such that the cover is prevented from touching the disk. However, the location of the ribs makes them ineffective to protect the disk when a cover breaks as a result of force applied to it.

A conventional mounting hub for the above described jewel box is usually hollow and is formed of a central circular recess and a central circular mount. The mount holds the disk securely when the disk is inserted into the container. The recess allows the disk to rest easily in the container and also allows easy removal of the disk from the container.

Small cut-outs are usually formed on the side walls of the base tray and small matching extensions are correspondingly formed on the side walls of the cover. The fit between the cut-outs and the extensions usually causes enough interference to sustain the container in the normally closed position. The end of the cover usually extends slightly over the end of the base thereby allowing one to pry open the cover with one hand, while holding the container in the other hand.

Another prior art embodiment of the jewel box for standard compact disks incorporates only two components: the cover and the base tray. The base tray has the mounting hub molded into it. In order to compensate for not being able to insert a promotional card in the inside of the base tray, the bottom surface of this base try is recessed and several tabs protrude under the bottom surface from exterior walls of the base tray. This construction allows a card to be inserted on the outside of the container under the bottom surface of the base tray. This embodiment is less expensive to build than the conventional jewel box, since it is made up of only two components and uses less raw materials than the standard three-piece jewel box. However, the automated assembling processes, which include inserting the back promotional card onto the exterior of the base tray, are more expensive and time consuming when this type of box is employed. The increased cost of production occurs because the tabs and/or protruding side walls adjacent the recessed bottom of the surface of the base tray often get caught in the automatic machines. For this reason, the insert cards and disk are often inserted by hand or extra maintenance for the machine must be expended to keep the production line up and running.

Until recently, the standard compact disk was the only size of optical disk employed for audio applications. However, today many recording companies are leaning towards using a smaller version of the standard compact disk, known as a mini-compact disk or mini-disk. The mini disk is permanently encased in a rectangular plastic enclosure (cartridge) and cannot be stored in an existing standard compact disk container. A need exists, therefore, for a container which can store and display a mini-disk cartridge and which can also be used in commercially available existing audio tape cassette and standard compact disk racks.

United States Patent No. 4,993,552 discloses a container for a mini-disk cartridge, the container comprising a base tray, a cover hinged to the base tray and a disk tray.

According to the invention, there is provided an enclosure to hold a rectangular mini-disk cartridge, said enclosure comprising:
a base tray comprising,
   an inside bottom surface,
   a pair of side walls protruding upwardly from said inside bottom surface,
   a rear wall portion extending upwardly from said inside bottom surface, and
   a front wall portion extending upwardly from said bottom inside surface;
a cover comprising,
   an inside top surface, and
   a pair of parallel side walls protruding downwardly from said inside top surface;
   means for hingedly connecting said base tray to said cover; and
a disk tray for receiving the cartridge comprising,
   a pair of side walls,
   a front wall,
   a rear wall,
   said side walls, said front wall, and said rear wall forming a rectangular shaped opening, and
   a rear ledge extending outwardly from said rear wall;
characterised by:
means for securing said disk tray within said base tray, said securing means comprising: a protrusion on at least one outside portion of at least one of said disk tray side walls; and a depression on at least one side portion of said base tray side walls corresponding in shape and position to the protrusion in the corresponding at least one of said disk tray side walls.

Preferred forms of implementation of this invention described in detail hereinbelow provide a container for mini-disk cartridges or the like:
which may be used in existing audio tape cassette retail racks;
which may be used in existing standard compact disk retail racks; which includes a means for identifying the enclosed disk from the bottom view of the container; and
in which the bottom surface of the base tray is not recessed and includes a means for identifying the enclosed disk from the bottom view of the container.

In one preferred embodiment, the container is made up of three main components, a base tray, a cover, and a disk tray. The base tray is pivotally connected to the cover, and the disk tray is inserted into the base tray. The container has dimensions in which the width is slightly larger than the width of a typical mini-disk cartridge, and the length and the height are approximately the same length and height of a standard audio tape cassette case. By incorporating a container with the same length and height as a standard audio tape cassette case, the container may be used in already existing audio tape cassette retail racks.

The cover of this embodiment has two parallel side walls which define the height of the container. One or more tabs protrude inwardly from each of these walls. The tabs are used to secure a thin promotional booklet or any other materials against the inside top surface of the cover. When inserted into place, the promotional material may cover the entire mini-disk cartridge from the top view. Even if promotional material is not enclosed within the cover, by inserting the mini-disk cartridge into the container with the label side face-up, the consumer may readily identify the enclosed mini-disk via the top view through the cover.

The base tray of the above embodiment has at least two parallel walls. These walls may have cut outs corresponding to the tabs in the cover, thereby providing a recess in which the cover tabs may rest when the container is in the closed position. On at least one of the parallel side walls of the base-tray, there is at least one small depression that correspondingly matches a small protrusion that extends from an interior portion of at least one side wall of the cover. The depression and matching protrusion secure the container in the closed position.

On at least one of the parallel side walls of the base tray, there is also at least one small depression that correspondingly matches at least one small protrusion that extends from an exterior portion of at least one side wall of the disk tray. The depression and matching protrusion secure the disk tray when it is inserted into the base tray.

An interior front wall which is located opposite the hinged portion is slightly recessed, so that the front end of the cover extends over it. Thereby, one is able to pry open the cover with one finger while holding the container in place with the other hand.

The disk tray of this first configuration has a rimmed center opening with a floor having dimensions slightly larger than the length and the width of a mini-disk cartridge. A stepped standoff attached to the floor in at least two of its corners allow the disk to rest comfortably and securely. On at least one side of the rimmed center opening is a finger insert recession, which allows one to easily retrieve the mini-disk cartridge. The rear rim of the center opening acts as a rest for the cover when the container is the closed position.

The side walls of the disk tray may have cut outs which line up with the cut outs in the base tray and correspond to the tabs in the cover. Thereby, a recess is created, in which the cover tabs may rest when the container is in the closed position.

Promotional material facing downward may be inserted into the base tray before the disk tray is inserted, and the disk may be inserted with its label facing upward or downward. When the container is in the closed position, the consumer can easily identify the contents from the bottom view by way of the promotional material, and may identify the contents of the container from the top view by way of additional promotional material inserted under the cover's tabs or via the mini-disk cartridge's label. Further the contents of the container may also be identified via an index or a tab by inserting it within the interior of the rear wall.

In a second configuration, the disk tray has a step attached to the disk tray's floor in at least two of its corners. Preferably, at least one side wall of the center opening has a small cut out, which allows the center opening to flex so that when a mini-disk cartridge is inserted into the disk tray, it is held securely in place. For this embodiment, the mini-disk cartridge and promotional material may be inserted in much the same way as described for the first configuration.

In a third configuration, the disk tray has unstepped standoffs attached to the floor of the disk tray in at least two of its corners. Again, this embodiment may be utilized with the mini-disk cartridge and promotional material as described in the first configuration. However, in this embodiment, the surface of the mini-disk cartridge rests against the floor of the disk tray.

In a fourth configuration, the disk tray's center opening has a window opening instead of a floor. Preferably, at least one corner of the center opening has a small cut out, which allows the sidewalls of the center opening to flex, such that the mini-disk cartridge may rest comfortably and securely.

In a first arrangement utilized with this fourth configuration, the mini-disk cartridge may be inserted into the disk tray with its label facing downward, and a booklet or other promotional material may be inserted within the cover under the tabs. When the container is in the closed position, the consumer can easily identify the contents of the container from the top-view, and can readily view additional information on the disk's label from the bottom-view. In a second arrangement, the mini-disk cartridge and promotional material may be inserted as discussed in the first configuration.

In a fifth configuration, the disk tray with the floor attached to its center opening does not have a stand off or a step molded to its surface. Rather, it simply utilizes a cut out in at least one side wall of the center opening to secure the mini-disk cartridge.

In a sixth configuration, the three component container having the disk tray with the center opening window may have a mounting hub, corresponding to the central opening of the disk, formed integrally with a bottom surface of the base tray. The hub is used to provide added assurance that the mini-disk cartridge remains secure within the container. For this configuration, the mini-disk cartridge and promotional material may be inserted and applied in much the same way as the first arrangement of the fourth configuration or the first configuration.

In a seventh configuration, the three component container having the disk tray with a floor attached to the bottom of the center opening may have a mounting hub, corresponding to the central opening of the mini-disk cartridge, formed integrally with a bottom surface of the disk tray. Again, the hub is employed for added stabilization of the mini-disk cartridge within the container. For this embodiment, the mini-disk cartridge and promotional material may be inserted and applied as described for the first configuration.

The invention will now be further described, by way of illustrative and non-limiting example, with reference to the accompanying drawings, in which:

FIG. 1 is an exploded perspective view of a container in an open position, with a disk tray having a window, a mini-disk cartridge and a booklet ready for insertion.

FIG. 2 is a top cut away perspective view of the container in the closed position, with a disk tray, a mini-disk cartridge and a booklet.

FIG. 3 is a bottom perspective view of the container in the closed position, with the disk tray and a mini-disk cartridge.

FIG. 4 is a cross-sectional side view of the container in the open position along line 4 in FIG. 1, with a mini-disk cartridge ready for insertion into the disk tray having a window.

FIG. 5 is a cross-sectional side view of the container in the closed position along line 5 in FIG. 2, with a mini-disk cartridge and a booklet inserted.

FIG. 6 is an exploded perspective view of the container in the open position, with a disk tray having a floor, a mini-disk cartridge and a booklet ready for insertion.

FIG. 7 is a cross-sectional side view of the container in the open position along line 7 of FIG. 6, with a mini-disk cartridge ready for insertion into the disk tray having a floor.

FIG. 8 is a sectional side view of the container in the open position along line 7 in FIG. 6 with a mini-disk cartridge and a booklet inserted into the disk tray having a floor.

FIG. 9 is an exploded perspective view of the container in the open position, having a mounting hub in the base tray, with the disk tray having a window, a mini-disk cartridge and a booklet ready for insertion.

FIG. 10 is a top perspective view of the mounting hub.

FIG. 11 is an exploded perspective view of the container in the open position with the disk tray having a floor and a mounting hub, a mini-disk cartridge and a booklet ready for insertion.

FIG. 12 is a top cut away perspective of a standard jewel box, with a mini-disk cartridge and a booklet.

FIG. 13 is an exploded perspective view of the container in the open position, with the disk tray having a floor with stepped standoffs, a mini-disk cartridge and a booklet ready for insertion.

FIG. 14' is a cross-sectional side view of the container in the open position, with a mini-disk cartridge ready for insertion into the disk tray having a floor with stepped standoffs.

FIG. 15 is a cross-sectional side view of the container in the closed position, with a mini-disk cartridge ready for insertion into the disk tray having a floor with stepped standoffs.

FIG. 16 is a top cut away perspective view of the container in the closed position, with the disk tray having a floor with stepped standoffs, a mini-disk cartridge and a booklet.

FIG. 17 is an exploded perspective view of the container in the open position, with the disk tray having a floor with steps, a mini-disk cartridge and a booklet ready for insertion.

FIG. 18, is an exploded perspective view of the container in the open position, with the disk tray having a floor with standoff backs, a mini-disk cartridge and a booklet ready for insertion.

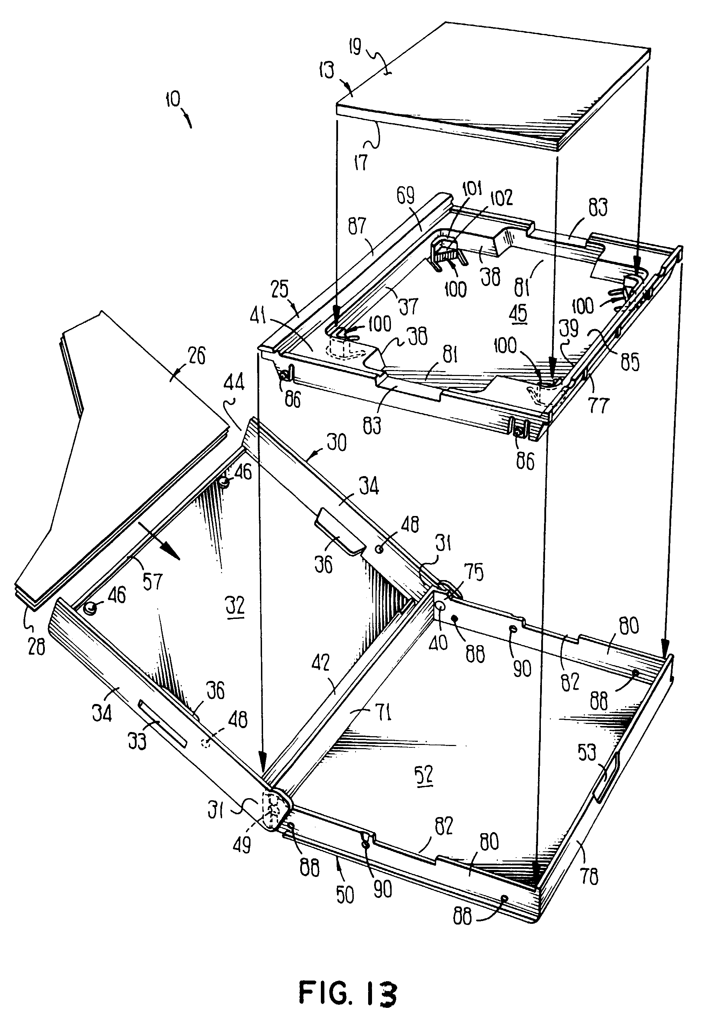

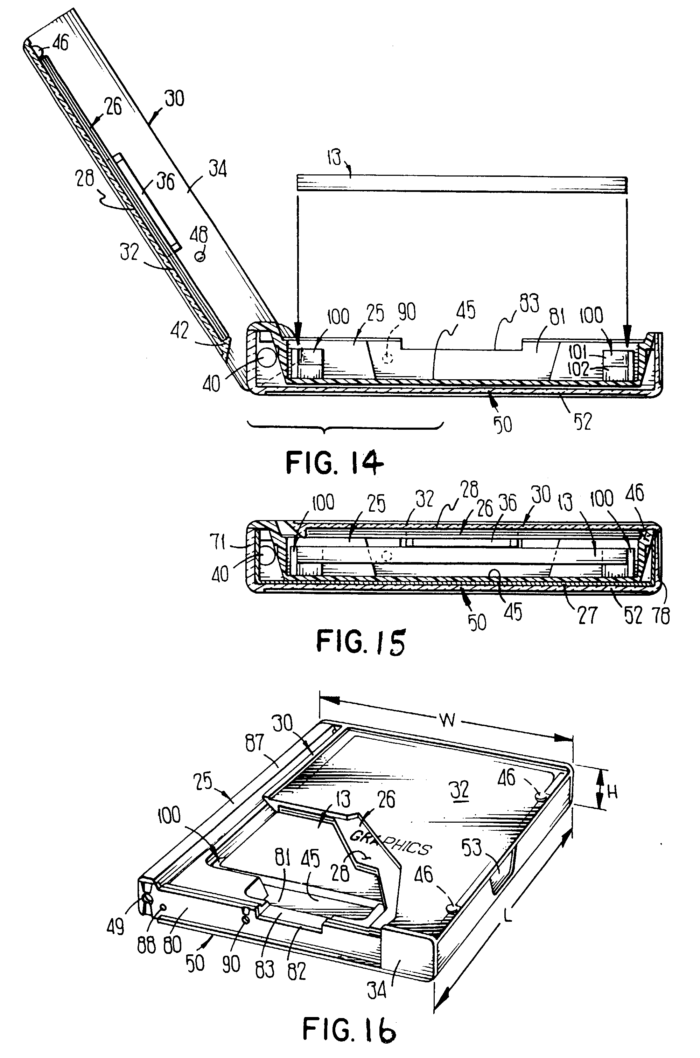

As shown in FIGS.13 to 18, in a first embodiment of the invention, a storage container 10 is preferably formed of a transparent, plastic material. The container 10 includes three components, a base tray 50, a cover 30, and a disk tray 25. Though the dimensions of the container 10 may vary to adapt to different sized mini-disk cartridges, a preferred embodiment is designed for a typical mini-disk cartridge 13 in which an optical disc is encased in a rectangular enclosure. The width of the container 10 is approximately 91 millimeters, the length is approximately 109 millimeters and the height is approximately 15 millimeters. (see FIG. 16). The width is designed to be slightly longer than the width of a mini-disk cartridge 13, while the length and height are employed to allow the container 10 to be utilized in already existing retail racks for standard audio tape cassette containers. In another embodiment, the length, the height, and the width of the container 10 may have varying dimensions to adapt the container 10 for use in already existing retail racks for standard size compact disk containers.

The cover 30 includes two side walls 34 which extend perpendicularly from a top surface 32. From each side wall 34 one or more side tabs 36 protrude inwardly. The side tabs 36 are positioned a sufficient distance from the top surface 32 to allow for the insertion of a booklet or card 26 between the side tabs 36 and the top surface 32. A small cut out 33 is formed in the center of at least one side wall 34 but preferably both, between the side tabs 36 and the top surface 32. The cut outs 33 improve the efficiency in the molding process, as well as serving other functions.

A booklet or card 26, with its graphics side 28 facing the cover's top surface 32 (see FIG.16), may be inserted within the cover 30 at the open front end 44 of the cover 30 and slid under the tabs 36 until it rests against a rear wall 42 of the cover 30. Small front tabs 46 protrude upwardly from a portion of the inside surface of the cover 30 adjacent the open front end 44 of the cover 30 to keep the booklet or card 26 in place once it rests against the rear wall 42.

At least one side wall 34, but preferably both, also has a capture protrusion 48 extending inwardly. Each rearward end 31 of both cover side walls 34 has a pivot protrusion 40 extending inwardly.

The base tray 50 includes a bottom surface 52, a pair of side walls 80, a front wall 78, and a rear wall 71. Each side wall 80 has notches 82, which correspond in position to the tabs 36 of the cover 30. At least one side wall 80, but preferably both, has a cover capture dimple 90, which correspondingly matches the capture protrusion 48 extending from the cover 30. At least one side wall 80, but preferably both, also has a disk tray capture dimple 88 on both sides of the side wall notch 82. Each base tray side rear wall 75 has a pivot depression or hole 49, which corresponds to the pivot protrusion 40 on the cover 30. The exterior of the front wall 78 has a slightly recessed area 53, preferably in its center, which may be used as a finger grip when opening the container 10.

The disk tray 25 has a rear wall 69, a front wall 77, and a rimmed center opening 85 having dimensions slightly larger than the length and the width of a mini-disk cartridge 13. The rimmed center opening 85 is made up of a rear rim 37, two side rims 38, a front rim 39, and a floor 45, which is attached to the bottom edges of the rims 37, 38 and 39. Positioned at at least two corners of the floor 45, but preferably at all four corners, are stepped standoffs 100 protruding from the top surface of the floor 45. Each standoff 100 has a back 101, which is adapted to substantially surround respective corners of a mini-disk cartridge 13. Each standoff 100 also may have a step 102, which supports the corners of the mini-disk cartridge 13 in a position away from the floor 45 and allows the user to easily slide the tip of his finger under the mini-disk cartridge 13 to facilitate its removal from the container 10. Preferably, the back 101 of each standoff 100 extends approximately 3.2 mm (one eighth of an inch) above the floor 45, and the step 102 of each standoff 100 extends approximately 1.6 mm (one sixteenth of an inch) above the floor 45. These heights may vary, however.

Each side rim 38 has a notch 83 on its exterior, which corresponds in position to the base trays notches 82 and the cover's tabs 36. At least one side rim 38, but preferably both, has a finger insert 81 formed in its interior, which preferably is centered between the corners of the center opening 85. The exterior of each side rim 38 also has capture protrusions 86 located on both sides of the side wall notches 83, which correspond to the capture dimples 88 of the base tray 50.

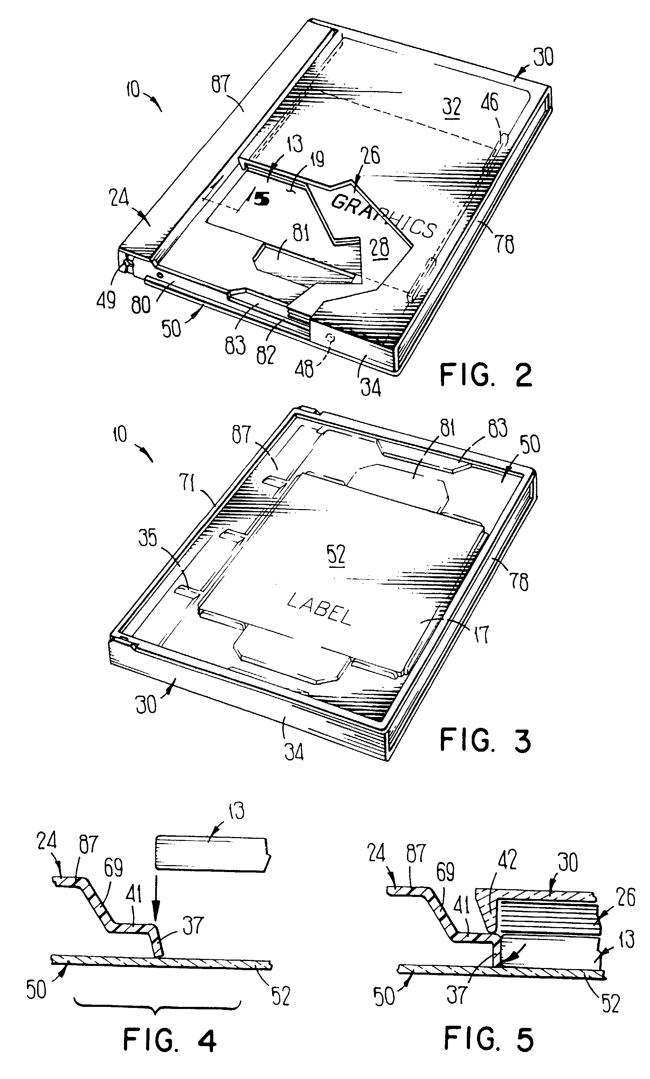

Molded to the top of the rear wall 69 of the disk tray 25 is a rear ledge 87, which extends across the pivot region of the base tray 50. The rear ledge 87 is supported by at least one, but preferably three structural ribs 35 (see FIG. 3). Molded to the bottom of the rear wall 69 and the top of the rear rim 37 is a rear cover support 41, which serves as a rest for the cover's rear wall 42 when the container 10 is in the closed position.

The base tray 50 and the cover 30 are attached by mating the pivot protrusions 40 on the cover 30 with the pivot depressions 49 in the base tray 50. The base tray's front wall 78 is slightly recessed so that the cover's front end 44 extends over it to allow one to pry open the cover 30 with a finger while holding the container 10 in the other hand. The slightly recessed area 53 on the exterior of the base trays front wall 78 may be utilized as a finger grip. The cover 30 rotates about an axis centered horizontally through the length of the rear wall 71.

The disk tray 25 is attached to the base tray 50 by inserting the disk tray capture protrusions 86 into the base tray's disk tray capture dimples 88. When the disk tray 25 is inserted, its front wall 77 rests flush against the base tray's front wall 78, and the exterior of each disk tray side rim 38 rests flush against the interior of each base tray side wall 80. The disk tray's rear ledge 87 rests on top of the base tray's rear wall 71.

As shown in FIG. 14, promotional material 27 may be inserted facing downward under the disk tray 25. A mini-disk cartridge 13 may be placed in the container 10 in the disk tray's center opening 85 of the disk tray 25 and a booklet or card 26 may be securely inserted under the cover 30. The mini-disk cartridge 13 may be inserted into the disk tray 25 with its non-label side 19 or its label side 17 facing the cover 30.

As shown in FIG 15, the corners of the mini-disk cartridge 13 rest on the steps 102 of the standoffs 100. The promotional material 27 may be bent such that it rests against the interior of the front wall 78 so that information or graphics may be displayed.

As shown in FIG. 16, the booklet or card 26 can be readily seen through the cover's transparent top surface 32. Though not shown, the rear wall 71 may be utilized to display information or graphics by placing an index or a tab against the interior of the rear wall 71.

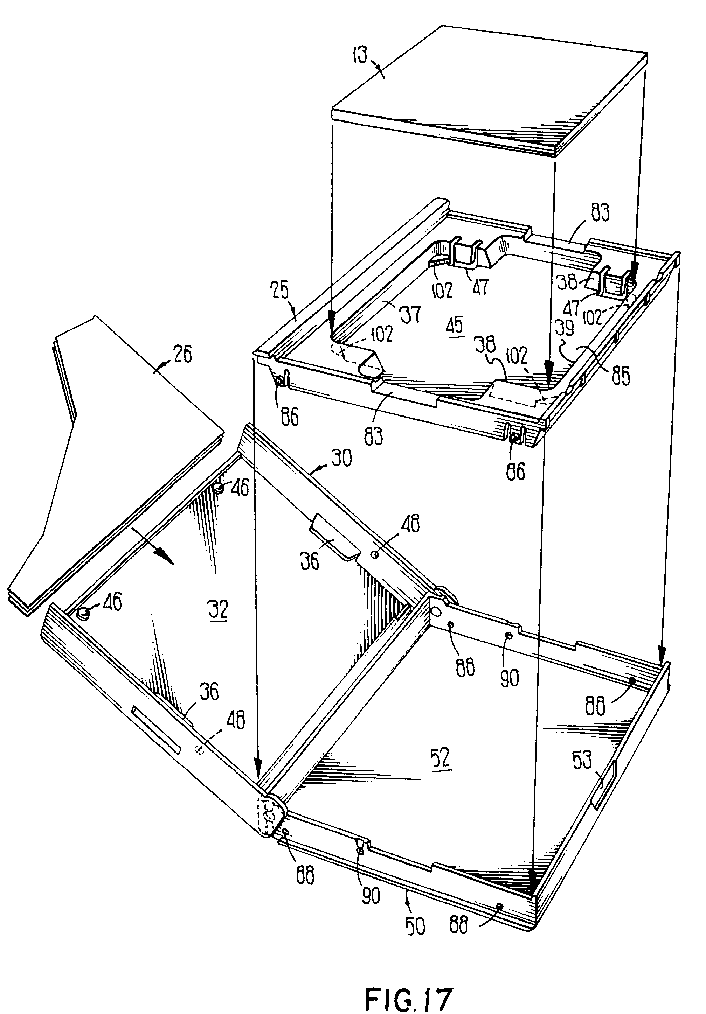

In a second configuration, as shown in FIG. 17, at least two corners of the floor 45, but preferably all four, have a step 102 formed to its top surface. Preferably, at least one side rim 38 has a small cut out 47 to allow the disk tray 25 to be more flexible in securing the mini-disk cartridge 13. The rear rim 37 and front rim 38 may also have cut outs 47.

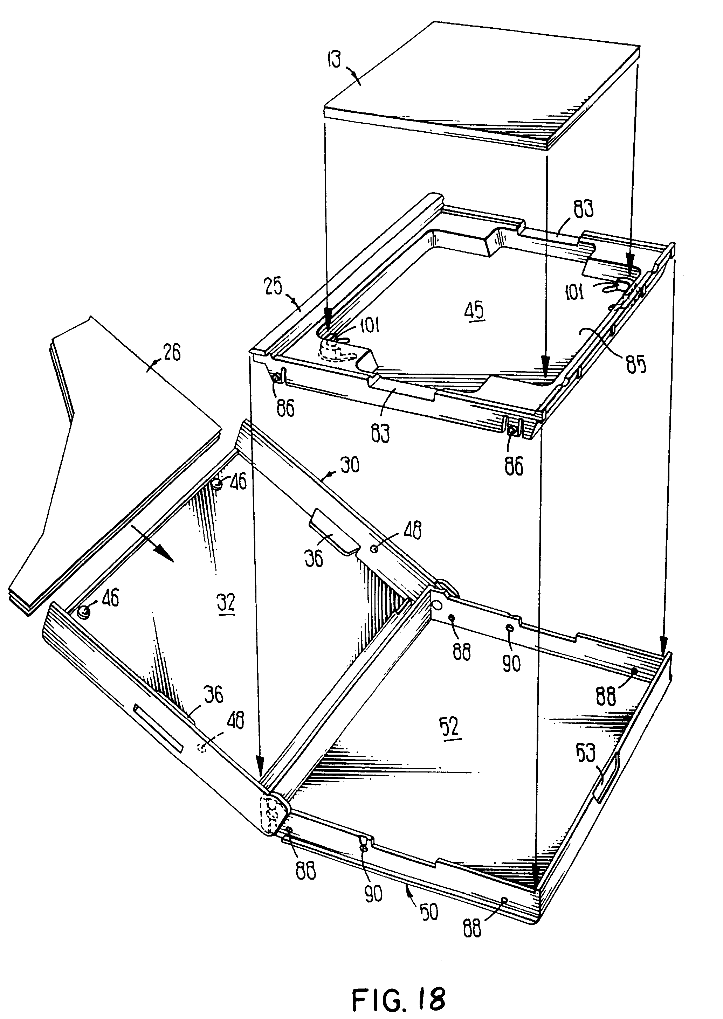

In a third configuration, as shown in FIG. 18, at least two corners of the floor 45 have a standoff back 101 formed to their top surface. Like the first configuration, each standoff back 101 substantially surround the corners of the mini-disk cartridge 13. However, in this configuration the bottom surface of the mini-disk cartridge 13 rests flush-against the floor 45 of the disk tray 25.

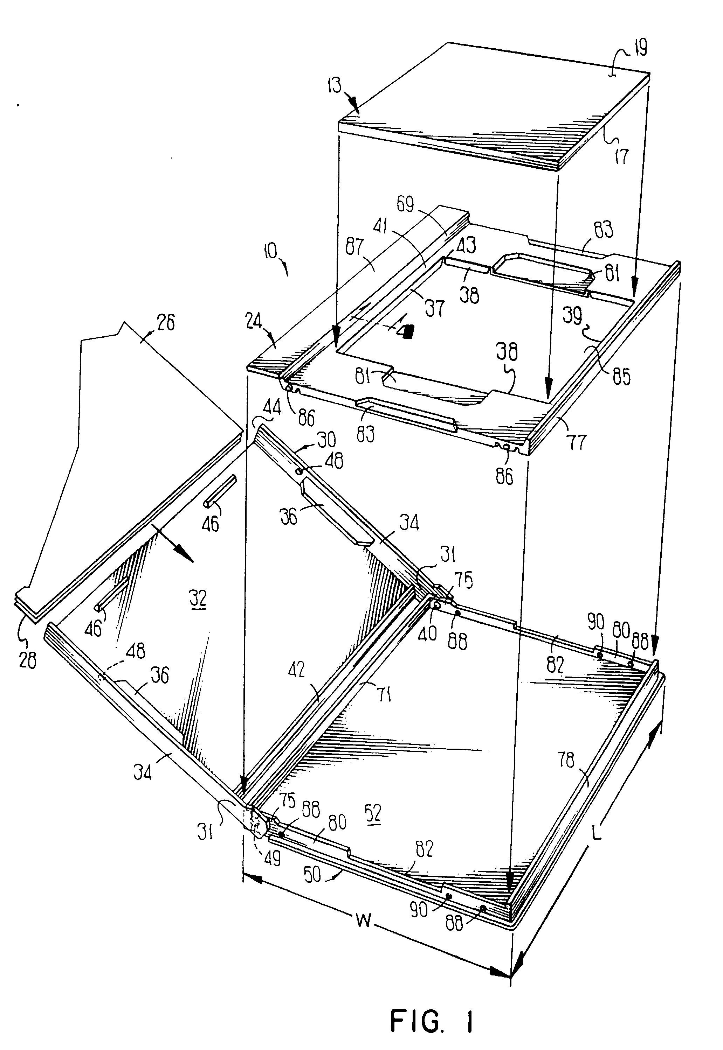

In a fourth configuration, as shown in FIG. 1, the rimmed center opening 85 of the disk tray 24 may be utilized without a floor 45. The rims 37, 38 and 39 are flexible and meet at cut out corners 43, to form a window-like opening.

As shown in FIG. 2, a mini-disk cartridge 13 may be placed in the container 10 in the disk tray's center opening 85 of the disk tray 24. A booklet or card 26, or the label-side 17 of the mini-disk cartridge 13 may be readily viewed through the cover's transparent top 32. However, as shown in FIG. 3, when promotional material 27 is not inserted under the disk tray 24, the label-side 17 of the mini-disk cartridge 13 may be inserted facing downward. This allows the consumer to view the mini-disk cartridge's label 17 through the base tray's transparent bottom surface 52.

As best shown in FIGS. 2 through 5, when the mini-disk cartridge 13 is inserted, the bottom portion of the flexible rims 37, 38 and 39 flex outward to encompass and secure the mini-disk cartridge 13. When the container 10 is in the closed position, the cover's rear wall 42 rests on top of the disk tray's rear cover support 41.

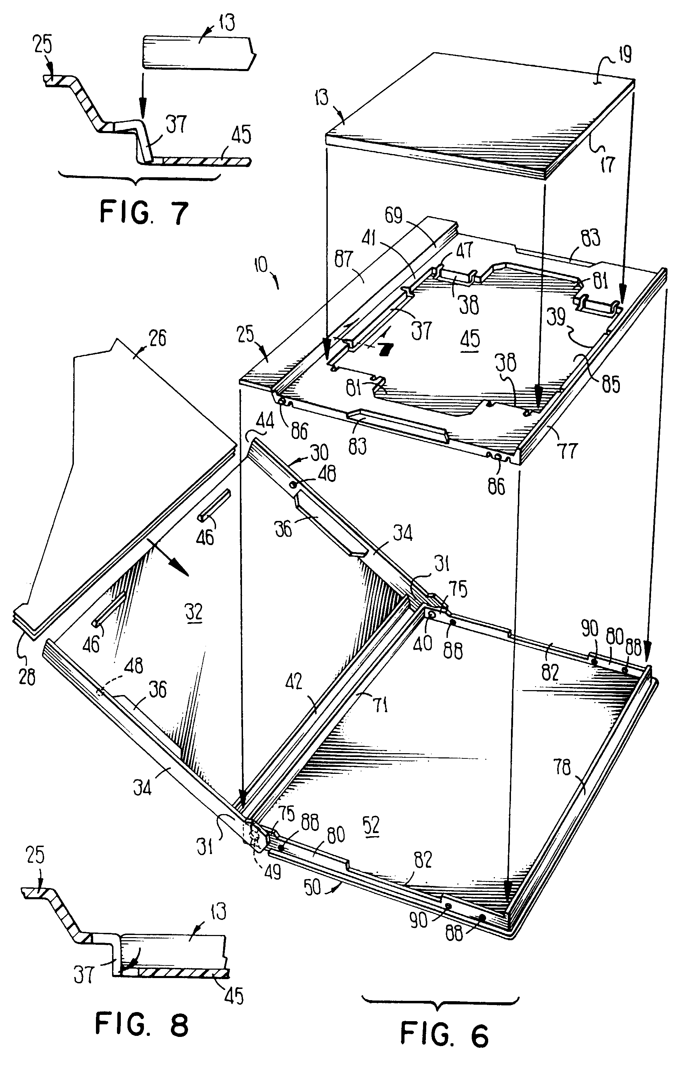

In a fifth configuration, as shown in FIG. 6, the disk tray 25 is substantially similar to the disk tray 24 in FIG. 1. However, this disk tray 25 has a floor 45 attached to the bottom of the center opening 85. The rear rim 37, the two side rims 38, the front rim 39, and the finger inserts 81 have rigid bottom portions to support the floor 45. Also, instead of cut out corners 43 (See FIG. 1), this disk tray 25 has at least one side cut out 47, but preferably two, located on the interior of the side rims 38 on each side of the finger inserts 81 and on the interior of the rear rim 37 and the front rim 39. As shown in FIGS. 7 and 8, when the mini-disk cartridge 13 is inserted, the rims 37, 38 and 39 surround the mini-disk cartridge 13 to ensure that it rests comfortably and securely.

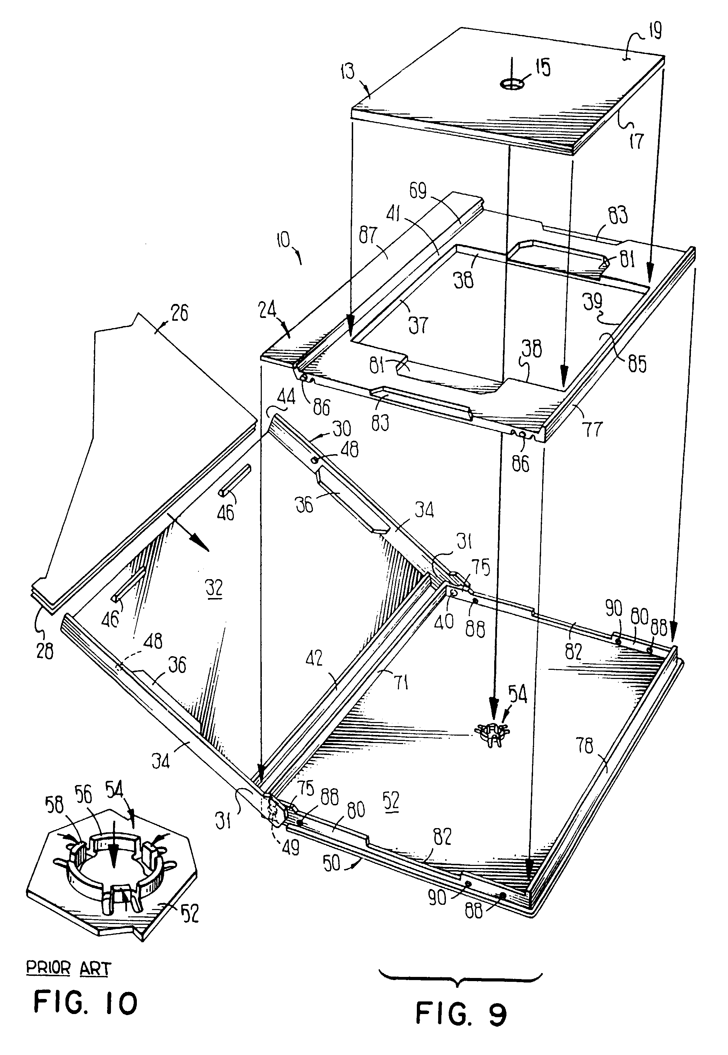

In a sixth configuration, as shown in FIG. 9, the cover 30, and the disk tray 24 with the center opening 85 may be used in conjunction with abase tray 50 having a circular mounting hub 54 formed integrally with its bottom surface 52. The mini-disk cartridge 13, via its center hole 15, may be mounted on top of the mounting hub 54. As shown in FIG. 10, the mounting hub 54 has a raised circular mount 56 and raised fingers 58. The mounting hub 54 gives added assurance that the mini-disk cartridge 13 will remain secure within the container 10.

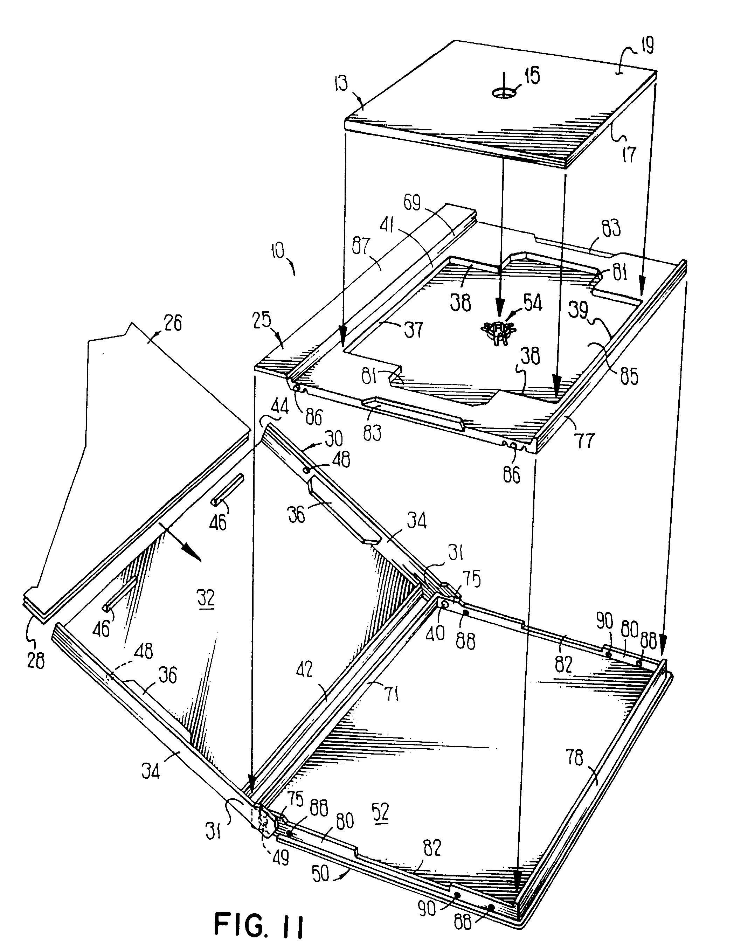

In a seventh configuration, as shown in FIG. 11, the disk tray with a floor 45 may have a circular mounting hub 54 formed integrally to the center of the floor 45. Again, the mounting hub 54 reassures that the mini-disk cartridge 13 remains secure inside the container 10.

In another embodiment, as shown in FIG. 12, the container 10 is formed of two main components, a base tray 50 and a cover 30. The base tray 50, the cover 30, and the dimensions of the container 10 in this embodiment are substantially the same as the base tray 50, the cover 30 and the dimensions for the fourth configuration. (See FIG. 1).

The base tray 50 has four flexible raised rims 65 formed integrally with its bottom surface 52. The raised rims 65 protrude upward and substantially surround the mini-disk cartridge 13 to ensure that is rests comfortably and securely. Though other placements of the rims may be used, at the present time, the optimum distance between each pair of parallel opposing rims seems to be .2mm less than the length and the width of the mini-disk cartridge 13. When the mini-disk cartridge 13 is inserted, the rims flex outward and create enough interference to allow the mini-disk cartridge 13 to rest comfortably and securely. The base tray's rear wall 70 is made up of an inner rear wall 73, and outer rear wall 74, and a top rear wall 72. Unlike the base tray 50 of the preferred embodiment, this base tray 50 does not have disk tray capture dimples 88 in its side walls 82, as shown in FIG. 1.

When the container 10 is in the closed position, as shown in FIG. 13, a mini-disk cartridge 13 may be placed in the container 10 within the raised rims 65 of the base tray 50. As in the preferred embodiment, a booklet or card 26 is placed under the cover 30 and the mini-disk cartridge 13 is inserted into the base tray 50 with the non-label side 19 facing the cover 30. The booklet or card 26 can be easily seen through the cover's transparent top 32. As shown in FIG. 14, the mini-disk cartridge's label side 17 can be observed through the base tray's transparent bottom surface 52.

As best shown in FIGS. 13 to 16, the raised rims 65 substantially surround the mini-disk cartridge 13 to secure it. When the container 10 is in the closed position, the cover's rear wall 42 rests on top of the rim 65 closet to the base tray's inner rear wall 73.

## Claims

1. An enclosure to hold a rectangular mini-disk cartridge (13), said enclosure comprising:
a base tray (50) comprising,
an inside bottom surface (52),
a pair of side walls (80) protruding upwardly from said inside bottom surface (52),
a rear wall portion (71) extending upwardly from said inside bottom surface (52), and
a front wall portion (78) extending upwardly from said bottom inside surface (52);
a cover (30) comprising,
an inside top surface (32), and
a pair of parallel side walls (34) protruding downwardly from said inside top surface (32);
means (40, 49) for hingedly connecting said base tray (50) to said cover (30); and
a disk tray (25) for receiving the cartridge (13) comprising,
a pair of side walls (38),
a front wall (39),
a rear wall (37),
said side walls (38), said front wall (39), and said rear wall (37) forming a rectangular shaped opening (85), and
a rear ledge (87) extending outwardly from said rear wall (37);
characterised by:
means (86, 88) for securing said disk tray (25) within said base tray, said securing means (86, 88) comprising: a protrusion (86) on at least one outside portion of at least one of disk tray side walls (38); and a depression (88) on at least one side portion of at least one of base tray side walls (80) corresponding in shape and position to the protrusion (86) in the corresponding at least one of said disk tray side walls (38).

2. An enclosure according to claim 1, wherein said connecting means (40, 49) for connecting said base tray (50) to said cover (30) comprises:
a depression (49) on an outside rear portion of each said base tray side walls (80);
a protrusion (40) on an inside rear portion (75) of each said cover side walls (34) corresponding in shape and position to the depression (49) in the corresponding said base tray side wall (80); and
said protrusion (40) is matingly engaged with said depression (49).

3. An enclosure according to claim 1 or claim 2, wherein said cover side walls (34) include an inwardly extending complimentary protrusion (36) corresponding to said base tray sidewall depression (82) and said disk tray side walls depression (81).

4. An enclosure according to any of claims 1 to 3, wherein said side walls (34) of said cover (30) from said inside top surface (32) extend slightly longer than said side walls (80) of said base tray (50) from said inside bottom surface (52).

5. An enclosure according to any of claims 1 to 4, wherein an inside portion of at least one said disk tray side wall (38) includes at least one depressed area (81).

6. An enclosure according to any of claims 1 to 5, wherein said side walls (38), said front wall (39), and said rear wall (37) of said disk tray (25) are arranged to form a window (85).

7. An enclosure according to any preceding claim, wherein a floor (45) having an inner top surface is integrally formed with the bottom portion of said side walls (38), said front wall (39) and said rear wall (37) of the formed rectangular opening (85) of said disk tray (25).

8. An enclosure according to claim 7, wherein a disk mounting hub (54) is integrally formed with said top surface of said floor (45) of said disk tray (25).

9. An enclosure according to claim 7 or claim 8, wherein a step (102) is integrally formed with said top surface of said floor (45) of said disk tray (25) in at least two corners.

10. An enclosure according to claim 7 or claim 8, wherein a corner-shaped standoff (101) having an inner surface is integrally formed with said top surface of said floor (45) of said disk tray (25) in at least two corners.

11. An enclosure according to claim 10, wherein a step (102) is integrally formed with said inner surface of said standoff (101).

12. An enclosure according to any of claims 1 to 6, wherein a disk mounting hub (54) is integrally formed with said inside bottom surface (52) of said base tray (50).

13. An enclosure according to any preceding claim, wherein a recessed area (53) is formed on an outside portion of said front wall (78) of said base tray (50).

## Patentansprüche

1. Behälter zum Halten einer rechteckigen Nini-Disk-Kassette (13), wobei der Behälter umfaßt:
eine Basisschale (50), mit:
einer Innenbodenfläche (52),
einem Paar von Seitenwänden (80), welches von der Innenseitenbodenfläche (52) nach oben ragt;
einer Rückwand (71), die sich von der Innenseitenbodenfläche (52) nach oben ausdehnt, und
einer Vorderwand (78), die sich von der Bodeninnenfläche (52) nach oben ausdehnt;
einen Deckel (30), mit:
einer Innenseitenoberfläche (32), und
einem Paar von parallelen Seitenwänden (34),
die von der Innenseitenoberfläche (32) nach unten ragen;
einer Einrichtung (40, 49), um die Basisschale (50) an dem Deckel (30) über ein Gelenk zu verbinden; und
eine Plattenschale (25), um die Kassette (13) aufzunehmen, mit:
einem Paar von Seitenwänden (38),
einer Vorderwand (39);
einer Rückwand (37);
wobei die Seitenwände (38), die Vorderwand (39) und die Rückwand (37) eine rechteckig-geformte Öffnung (85) bilden, und
einem hinteren vorspringenden Rand (87), der sich von der hinteren Wand (37) nach außen hin ausdehnt;
gekennzeichnet durch:
eine Einrichtung (86, 88), um die Plattenschale (25) innerhalb der Basisschale zu sichern, wobei die Sicherungseinrichtung (86, 88) umfaßt: einen Ansatz (86) auf zumindest einem Außenbereich der zumindest einen der Plattenschalen-Seitenwände (38); und eine Vertiefung (88) auf zumindest einem Seitenbereich der zumindest einen der Basisschalen-Seitenwände (88) entsprechend der Form und Lage zum Ansatz (86) in der entsprechenden zumindest einen der Plattenschalen-Seitenwände (38).

2. Behälter nach Anspruch 1, wobei die Verbindungseinrichtung (40, 49) zum Verbinden der Basisschale (50) mit dem Deckel (30) umfaßt:
eine Vertiefung (49) in einem hinteren Außenbereich der Basisschalen-Seitenwände (80);
einen Ansatz (40) auf einem hinteren Innenbereich (75) einer jeden der Deckelseitenwände (34) entsprechend der Form und Lage der Vertiefung (49) in der entsprechenden Basisschalen-Seitenwand (80); und
wobei der Ansatz (40) passend in die Vertiefung (49) eingreift.

3. Behälter nach Anspruch 1 oder 2, wobei die Deckelseitenwände (34) einen sich nach innen ausdehnenden ergänzenden Ansatz (36) entsprechend der Basisschalen-Seitenwandvertiefung (82) und der Plattenschalen-Seitenwandvertiefung (81) aufweisen.

4. Behälter nach einem der Ansprüche 1 bis 3, wobei die Seitenwände (34) des Deckels (30) von der Innenoberfläche (32) sich etwas länger als die Seitenwände (80) der Basisschale (50) von der Innenbodenfläche (52) ausdehnen.

5. Behälter nach einem der Ansprüche 1 bis 4, wobei ein Innenseitenteil von zumindest einer Plattenschalen-Seitenwand (38) zumindest einen vertieften Bereich (81) aufweist.

6. Behälter nach einem der Ansprüche 1 bis 5, wobei die Seitenwände (38), die Vorderwand (39) und die Rückwand (37) der Plattenschale (25) so angeordnet sind, daß sie ein Fenster (85) bilden.

7. Behälter nach einem der vorhergehenden Ansprüche, wobei ein Boden (45), der eine Innenoberfläche hat, einstückig mit dem Boden der Seitenwände (38), der Vorderwand (39) und der Rückwand (37) der gebildeten rechteckigen Öffnung (85) der Plattenschale (25) ausgebildet ist.

8. Behälter nach Anspruch 7, wobei eine Plattenbefestigungsnabe (54) einstückig mit der Oberfläche des Bodens (45) der Plattenschale (25) ausgebildet ist.

9. Behälter nach Anspruch 7 oder 8, wobei eine Stufe (102) einstückig mit der Oberfläche des Bodens (45) der Plattenschale (25) in zumindest zwei Ecken gebildet ist.

10. Behälter nach Anspruch 7 oder 8, wobei ein eckenförmiges Abstandselement (101), welches eine Innenfläche hat, einstückig mit der Oberfläche des Bodens (45) der Plattenschale (25) in zumindest zwei Ecken einstückig ausgebildet ist.

11. Behälter nach Anspruch 10, wobei eine Stufe (102) mit der Innenfläche des Abstandselements (101) einstückig ausgebildet ist.

12. Behälter nach einem der Ansprüche 1 bis 6, wobei eine Plattenbefestigungsnabe (54) mit der Innenbodenfläche (52) der Basisschale (50) einstückig ausgebildet ist.

13. Behälter nach einem der vorhergehenden Ansprüche, wobei ein ausgebuchteter Bereich (53) auf einem Außenbereich der Vorderwand (78) der Basisschale (50) gebildet ist.

## Revendications

1. Boîtier destiné à maintenir une cartouche de mini-disque rectangulaire (13), ledit boîtier comportant :
un plateau de base (50) comportant,
une surface inférieure interne (52),
une paire de parois latérales (80) qui dépassent vers le haut depuis ladite surface de fond intérieure (82),
une partie de paroi arrière (71) s'étendant vers le haut depuis ladite surface de fond intérieure (52), et
une partie de paroi avant (78) qui s'étend vers le haut depuis ladite surface intérieure de fond (52);
un couvercle (30) comportant,
une surface supérieure intérieure (32), et
une paire de parois latérales parallèles (34) qui dépassent vers le bas depuis ladite surface supérieure intérieure (32);
des moyens (40, 49) destinés à relier de manière articulée ledit plateau de base (50) au dit couvercle (30); et
un plateau de disque (25) destiné à recevoir la cartouche (13) comportant,
une paire de parois latérales (38),
une paroi avant (39),
une paroi arrière (37),
lesdites parois latérales (38), ladite paroi avant (39) et ladite paroi arrière (37) formant une ouverture de forme rectangulaire (85), et
un rebord arrière (87) s'étendant vers l'extérieur depuis ladite paroi arrière (37);
caractérisé par :
des moyens (86, 88) destinés à fixer ledit plateau de disque (25) a l'intérieur dudit plateau de base, lesdits moyens de fixation (86, 88) comportant : une saillie (86) sur au moins une partie extérieure d'au moins l'une des parois latérales de plateau de disque (38); et une dépression (88) sur au moins une partie latérale d'au moins une des parois latérales de plateau de base (80) correspondant en forme et en position a la saillie (86) dans celle correspondante desdites parois latérales de plateau de disque (38).

2. Boîtier selon la revendication 1, dans lequel lesdits moyens de raccordement (40, 49) destinés à relier ledit plateau de base (50) au dit couvercle (30) comportent :
un renfoncement (49) sur une partie arrière extérieure de chacune desdites parois latérales de plateau de base (80); une saillie (40) sur une paroi arrière intérieure (75) de chacune desdites parois latérales de couvercle (34) correspondant en forme et en position au renfoncement (49) dans ladite paroi latérale de plateau de base (80) correspondante; et
ladite saillie (40) est engagée de manière correspondante avec ledit renfoncement (49).

3. Boitier selon la revendication 1 ou la revendication 2, dans lequel lesdites parois latérales de couvercle (34) comprennent une saillie complémentaire s'étendant vers l'intérieur (36) correspondant à ladite dépression de paroi latérale de plateau de base (82) et à ladite dépression de paroi latérale de plateau de disque (81).

4. Boîtier selon l'une quelconque des revendications 1 à 3, dans lequel lesdites parois latérales (34) dudit couvercle (30) depuis ladite surface supérieure intérieur (32) s'étendent sur légèrement plus long que lesdites parois latérales (80) dudit plateau de base (50) depuis ladite surface inférieure interne (52).

5. Boîtier selon l'une quelconque des revendications 1 à 4, dans lequel une partie intérieure d'au moins une paroi latérale de plateau de disque (38) comprend au moins une zone renfoncée (81).

6. Boîtier selon l'une quelconque des revendications 1 à 5, dans lequel lesdites parois latérales (38), ladite paroi avant (39) et ladite paroi arrière (37) dudit plateau de disque (25) sont agencées afin de former une fenêtre (85).

7. Boîtier selon l'une quelconque des revendications précédentes, dans lequel un fond (45) ayant une surface supérieure interne est formé d'un seul tenant avec la partie inférieure desdites parois latérales (38), de ladite paroi avant (39) et de ladite paroi arrière (37) de l'ouverture rectangulaire (85) dudit plateau de disque (25).

8. Boîtier selon la revendication 7, dans lequel un moyeu de montage de disque (54) est formé d'un seul tenant avec ladite surface supérieure dudit fond (45) dudit plateau de disque (25).

9. Boîtier selon la revendication 7 ou la revendication 8, dans lequel un palier (102) est formé d'un seul tenant avec ladite surface supérieure dudit fond (45) dudit plateau de disque (25) dans au moins deux coins.

10. Boîtier selon la revendication 7 ou la revendication 8, dans lequel un support en forme de coin (101) ayant une surface interne est formé d'un seul tenant avec ladite surface supérieure dudit fond (45) dudit plateau de disque (25) dans au moins deux coins.

11. Boîtier selon la revendication 10, dans lequel un palier (102) est formé d'un seul tenant avec ladite surface interne dudit support (101).

12. Boîtier selon l'une quelconque des revendications 1 à 6, dans lequel un moyeu de montage de disque (54) est formé d'un seul tenant avec ladite surface inférieure interne (52) dudit plateau de base (50).

13. Boîtier selon l'une quelconque des revendications précédentes, dans lequel une zone renfoncée (53) est formée sur une partie extérieure de ladite paroi avant (78) dudit plateau de base (50).
